# EUROPEAN PATENT SPECIFICATION

(11) **EP 3 891 044 B1**
(45) Date of publication and mention of the grant of the patent: **23.11.2022**
(21) Application number: 19813670.7
(22) Date of filing: 26.11.2019
(51) Int. Cl.: B62K 5/027, B62K 21/02, B62D 9/02, B62D 61/08, B62K 5/10, B62D 31/00

(54) **SELF-BALANCING TILTING VEHICLE WITH AN ELECTRIC TILTING MEMBER**
SELBSTAUSGLEICHENDES KIPPFAHRZEUG MIT EINEM ELEKTRISCHEN KIPPGLIED
VÉHICULE INCLINABLE À AUTO-ÉQUILIBRAGE DOTÉ D'UN ÉLÉMENT D'INCLINAISON ÉLECTRIQUE

(30) Priority: 03.12.2018 NL 2022119
(43) Date of publication of application: 13.10.2021
(73) Proprietor: Carver B.V., 3295 KV 's-Gravendeel (NL)
(72) Inventor: VAN DEN BRINK, Christopher Ralph, 3295 KV 's-Gravendeel (NL)
(74) Representative: Nederlandsch Octrooibureau
(86) International application number: PCT/NL2019/050781
(87) International publication number: WO 2020/117043

(56) References cited:
- EP-A1- 2 345 576
- EP-A1- 3 305 640
- WO-A1-2007/119918
- WO-A1-2014/011821
- WO-A2-2014/022315

## Description

### Field of the invention

The present invention relates to a tilting vehicle comprising a rear frame section having two drive wheels and a front frame section having at least one wheel, connected to the rear frame section such as to be tiltable about a tilt axis that extends in a length direction, the front frame section carrying a driver seat, the rear frame section comprising a propulsion drive for rotating the drive wheels, a tilting drive for tilting the front frame section about the tilt axis and a controller for controlling the tilting drive based on driver steering input.

### Background art

Such a self-balancing tilting vehicle is known from WO95/34459, describing a vehicle in which the front wheel can freely pivot about a generally vertical front suspension axis. The steering wheel that is operated by the driver, is controlling two hydraulic cylinders that pivot the front frame section in which the driver is seated, about the longitudinal tilt axis. A sensor on the front wheel measures the steering force or torque that acts on the front wheel and interrupts the action of the tilting cylinders when this force or torque is below a pre-determined threshold value, for instance zero. If, at a certain speed, the driver turns the steering wheel to the right, this actuates the tilting cylinders and the front frame section will start to tilt away from the vertically upright position, to the right. The front wheel, that is freely suspended, experiences a torque and will start to tilt to about the front fork axis, causing the vehicle to move into a right curve. When the torque on the front wheel returns to zero, the tilting is interrupted and the tilting position of the front frame part will be maintained at the right angle, that matches with the velocity, the radius of the curve driven and the weight of the front frame part, including the driver.

In WO99/14099 a self-balancing tilting vehicle having a rotation sensor coupled to the front wheel is described. The rotation sensor measures the difference in rotation between the front wheel about its front fork axis and the rotation input obtained from the driver by turning the steering wheel, and operates the tilting cylinders based on this signal difference. This results in improved handling and ease of driving.

In WO99/24308 a self-balancing tilting vehicle comprising an opposite lock power cylinder attached to the front steering wheel, so that the tilting section will easily fall into the bend, when the steering wheel is turned by the driver. Tilting vehicles as described in WO99/14099 and WO99/24308 are driven by a combustion engine and involve a relatively heavy hydraulic tilting mechanism.

WO2014/011821 describes a self-balancing tilting vehicle having an electronic steering control unit and a steering input device configured to send an electronic signal to the electronic steering control unit associated with turning the three-wheeled vehicle, wherein the electronic steering control unit is configured to counter-steer the front wheel in response to receiving the electronic signal. The counter-steering of the front wheel initiates a leaning of the passenger cabin a direction of turning of the three-wheeled vehicle. Tilting of the passenger cabin is achieved by a motor which drives a worm screw which is attached to the rear frame section and that rotates a tilt gear which is attached to the cabin section plus or minus 45 degrees around a tilting axis. Like linear actuators, this design is self-locking and allows for precise, repeatable positioning. Due to this self-locking feature, relatively high forces occur on the tilting mechanism requiring heavy duty components being used for reliable and smooth operation thereof. WO2014/022315 discloses the preamble of the independent claim.

### Summary of the invention

It is an object of the present invention to provide a self-balancing tilting vehicle which is light-weight, and of a compact construction. It is a further object of the invention to provide a self-balancing tilting vehicle that is suitable to be utilized in conjunction with an electric drive, which is reliable and which requires little maintenance.

Hereto the vehicle according to the invention is characterized in that the tilting drive comprises an electric motor situated at a predetermined distance from the tilt axis with a gear, and a tilting member having a toothed surface engaging with the gear such that the tilting member can be displaced transversely to the tilting axis by rotation of the gear, whereby the tilting drive and the tilting member are connected to the respective front and rear frame sections. The controller is adapted to allow the gear of the tilting drive to move freely along the toothed surface of the tilting member around a neutral position in which the front frame section is substantially vertical when no steering input is provided.

The electric tilting drive according to the invention, acting via a toothed gear on the toothed surface of the drive member, provides a reduced-weight tilting mechanism that can rapidly and reliably tilt the front frame section into the required position. When driving along a straight path the front frame section is in its upright position and a low torque is exerted on it by the tilting drive. Because the controller operates the tilting drive at low torque, it can freely move along the toothed drive member. When the rear frame section drives with one of the drive wheels over a bump or through a hole in the road surface, the rear frame section can tilt while the front frame section remains upright. In this manner large forces on the drive motor and on the teeth of the drive member are prevented and thus will reduce disturbances to the front frame section and improves driving control. The invention is based on the insight that a relatively light weight electric motor can provide a large tilting moment by placing this motor at a predetermined distance from the tilt axis. As the tilting forces that are required, especially for speeds suitable for city traffic, i.e. below 50 km/h, are more or less constant and relatively low, an even lighter-weight electric motor can operate in conjunction with the toothed tilting member and still achieve a reliable tilting operation.

The tilting mechanism according to the invention, which for instance may comprise a rack and pinion drive, can be easily installed, inspected, disassembled and maintained and adjusted to be in play free operational state and provides for safe and reliable tilting.

Although the vehicle is described as comprising a driver seat, it will be clear that the invention extends both to driver driven and self-driving vehicles. Thus the term driver seat also implies a driver in a self-driving vehicle, i.e. more a "passenger" of the vehicle.

In an embodiment according to the invention the controller and the propulsion drive are adapted to drive each drive wheel at a mutually different speed or torque. Preferably the motors are electric drive motors. Electric drive motors and their associated structures are compact and light when compared to other types of propulsion which could be implemented, such as combustion engines. Thus, by including the electric drive motors in the tilting vehicle, the vehicle can be more light-weight than if another propulsion system were to be used.

Furthermore, by providing an individual electric drive for each rear wheel, the rear wheels can be operated at different and at equal speeds, torques or rotational directions. Driving the outside rear wheel with more positive torque and the inside rear wheel with a less positive or negative torque causes a moment on the rear frame section about a substantially vertical axis and may assist turning the front wheel and thereby the vehicle into a curve. It was found that providing an individually controlled electric motor for each rear wheel greatly improves handling of the tilting vehicle in a large range of speeds and under widely varying driving conditions, as the torque steering can be used to assist and/or balance the turning motion of the vehicle when steered into a bend. To this end the drive wheels are each driven by a respective electric motor drive, which are each connected to the aforementioned controller of the vehicle, which controllers are receiving velocity signals and steering input signals for indicating a driving direction of the vehicle. The controller is adapted to operate the electric motors at mutually different torques, speeds or rotational directions when the driving direction is a curve.

At higher vehicle speeds the tilting motion may be supported by a torque difference that is generated on the rear drive wheels in response to a steering motion, whereby initially a change in direction as intended by the driver is attenuated, such that the tilting motion of the vehicle is initiated prior to the directional change. This results in a lower force requirement to induce the tilting action, allowing a light-weight electric tilting drive to also be successfully used at higher driving speeds.

According to an aspect of the invention, the rear frame section further comprises a battery providing power to the drive wheels and to the tilting drive. By including the battery in the rear frame section, the weight of the rear frame section is relatively high in comparison to the front frame section. As a result, the rear frame section provides a stable basis, for taking up the reaction forces that are exerted when the front frame section is rotated about the tilt axis. This stability is provided regardless of the position of the rear frame section, thus even, for example, when driving on uneven roads or surfaces with limited grip.

Furthermore, through the use of a battery, both the propulsion drive and electric tilting drive can be powered in a simple way, without requiring a complex connection between the power source and both drives. During linear driving motions, most of the power from the battery is used for powering of the drive wheels, while the tilting drive is in a neutral position, keeping the front frame section straight up. When a force or moment is exerted on the steering axis of the vehicle in order to make the vehicle change direction - either by a driver or by the control system of a self-driving vehicle - this force or moment is monitored by a steer force sensor, while simultaneously the vehicle's speed is measured by a speed sensor. The vehicle controller is arranged to control the tilting drive, on the basis of the steer force sensor signal and the velocity signal, tilting the vehicle in such a way that the vehicle may turn comfortably at the driven velocity.

Various solutions can be applied for the connection and for the interaction between the steering force sensor and the tilting drive. A mechanical, hydraulic, electrical or electronic method of operation, or a combination thereof is conceivable, including a hydraulic steering mechanism. Preferably, the connection and interaction is achieved through a combination of an electrical or electronic measurement and control system based on electrical or electronic sensors, wherein the tilting drive is controlled electrically. Particularly suitable are integrated micro electronic circuits on which measurement and control algorithms can be programmed with the aid of appropriate software. By incorporating integrated micro electronic circuits into the system, it is possible to achieve rapid optimization of the measurement and control parameters. Additionally, the integrated micro electronic circuits make it possible to configure the tilting behavior of the vehicle in the form of preprogrammed settings which are retrieved from memory as required.

The tilting member may be designed as one or more arms connected between the tilting drive and the rear and front frame section, or a straight or curved uninterrupted track along which one or more engagement elements are moveable. However, according to a preferred embodiment, the tilting member has a curved toothed surface with a center of curvature situated at or near the tilting axis. The tilting drive comprises a drive member which engages with the toothed surface of the tilting member, such that the tilting member and tilting drive form a rack and pinion assembly. The curved surface of the tilting member having a center of curvature near the tilting axis provides for a regular and stable tilting motion around the tilting axis. The tilting member may remain stationary with respect to either the front or rear frame section, as the drive member moves along the toothed surface to tilt the front frame section with respect to the rear frame section. Using a toothed surface in combination with the engaging drive member, the motion along the surface is accurately controllable. Advantageously, the stationary tilting member and tilting drive may be positioned at a relatively high position in the vehicle, such that a large moment around the tilting axis can be generated. The lightweight construction of the tilting drive helps to maintain a low center of gravity of the rear frame section.

According to a further aspect of the invention, the propulsion drive comprises an electric motor placed at each respective drive wheel, a battery being situated between the drive wheels. By positioning the battery between the drive wheels, a low center of gravity of the rear frame section is ensured.

According to another aspect of the invention, the tilting member is partly circular and is connected to the front frame section on each side of the tilting axis, the tilting member extending above the battery. The partly circular toothed tilting member with engaging tilting drive member allows for a large tilting motion being made by the vehicle with a compact construction in a symmetrical tilting operation. By connecting the tilting member directly to the front frame section, while the tilting drive is connected to the rear frame section, no further transmission components are required for tilting the front frame section with respect to the rear frame section, thus enabling a light-weight and compact tilting design for the vehicle.

According to an aspect of the invention, wherein the distance of the tilting axis from a horizontal drive surface is larger at the front wheel position then at the rear wheel position. This places the tilting drive at a large distance from the tilting axis such that a large arm is obtained and the moment that is generated by the tilting drive to induce tilting of the front frame section is high. The upwardly sloping tilt axis results in a smaller arm at the position of the front frame section such that this front frame section can be easily tilted. The angle between the tilting axis and the ground surface is preferably about 7-8°.

According to a further aspect of the invention, the plane of the tilting member is substantially perpendicular to the tilting axis. As a result, the plane of the tilting member is leaning backward with respect to a vertical plane, as seen in the driving direction of the vehicle. The back leaning plane of the rack fits in well with the ergonomics of a back leaning driver's and/or passenger seat, since this configuration allows the front frame section to partially overhang the rear frame section, without restricting the tilting motion Thus the back leaning tilting member allows for a more compact construction of the front and rear frame section assembly, herewith also reducing the wheelbase and turning radius According to an embodiment, the electric motor comprises a housing with a motor member, a transmission gear connected to the drive gear and a resilient brake member which blocks rotation of the drive gear when no electrical power is supplied to the motor member. The transmission gear allows the electric motor to operate the drive gear at optimum power usage. Through the addition of the brake member, the tilting of the vehicle may be mechanically locked, for instance when the power is off.

According to a further embodiment, an adjustment mechanism is arranged at ends of the titling member. The adjustment mechanism is positioned between the respective ends of the tilting member and the connection points of the frame of the front (or rear) frame section to which the tilting member is attached. The adjustment mechanism provides for easy release and assembly of the front and rearframe sections, as well as allows the tilting drive member to be (re-)adjusted for a good fit with the tilting drive member throughout tilting operations, despite wear and tear of the member and drive. The adjustment mechanism may be a simple configuration of adjusting screws, which allow easy manual adjustment of the tilting member.

### Short description of drawings

Some embodiments of a tilting vehicle according to the present invention will, by way of non-limiting example, be discussed in more detail below, with reference to the attached drawings, in which
Fig. 1 shows a perspective view of a tilting vehicle according to the invention in a tilted state.
Fig. 2 shows a perspective view of structure of the tilting vehicle according to Fig. 1 without body panels and in an un-tilted state.
Fig. 3 shows a longitudinal cross-section of the tilting vehicle of Fig. 1.
Fig. 4 shows a top view of the tilting system components of the tilting vehicle of Fig. 1.
Figs. 5 and 6 show in more detail the tilting mechanism as used in the vehicle according to Fig. 1.
Fig. 7 shows a schematic overview of the control system for balancing the tilting vehicle of Fig. 1.

### Description of embodiments

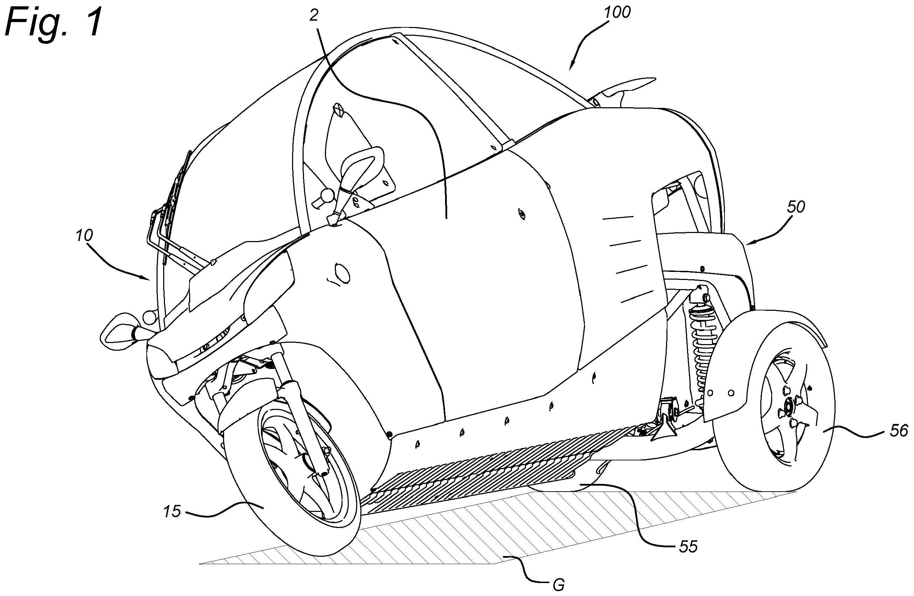

Fig. 1 shows a perspective view of a tilting vehicle 100 in a tilted position. The tilting vehicle 100 comprises a front frame section 10 with a front wheel 15 and body panels comprising a side panel 2 and a rear frame section 50 with two drive wheels 55,56. The front fame section 10 is connected to the rear frame section 50 in such a manner that the frame sections are tiltable with respect to each other. When a ground plane G onto which the tilting vehicle 100 is positioned is substantially flat, generally the front frame section will be tilting with respect to the rear frame section, offering a driving experience that combines the steering feel of a car and tilting sensation of driving a motorbike, when driving through bends.

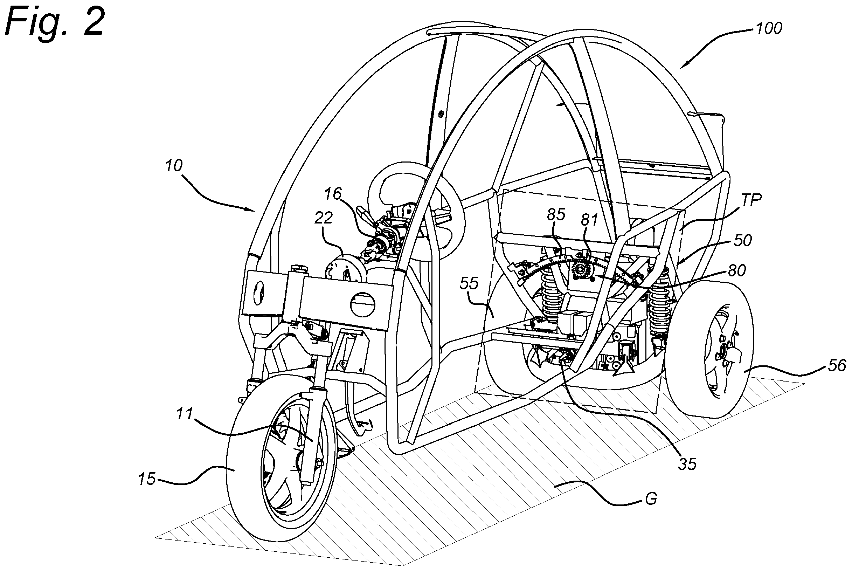

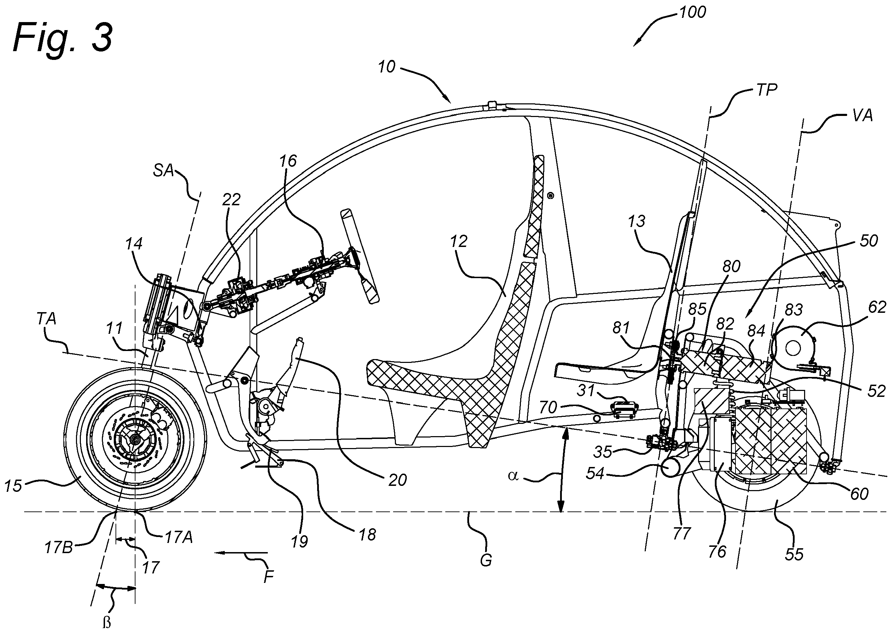

Fig. 2 shows a perspective view of structure of the tilting vehicle 100 according to Fig. 1 without body panels and in an upright position. The connection between the front and rear frame sections is shown to comprise a hinge 35 and a tilting mechanism, having a rack 85 and pinion drive 80 wherein the pinion 81 of the pinion drive is movable along a curved and toothed lower surface of the rack 85. The tilting mechanism allows controlled tilting of the front frame section with respect to the rear frame section along the entire toothed surface of the rack 85. As a result, the front frame 10 section is moveable between a first extreme tilted position in which the front frame section 10 is tilted around a longitudinal tilting axis TA (see Fig. 3) towards the side of first drive wheel 55 and a second extreme tilted position in which the front frame section 10 is tilted towards the side of the second drive wheel 56.

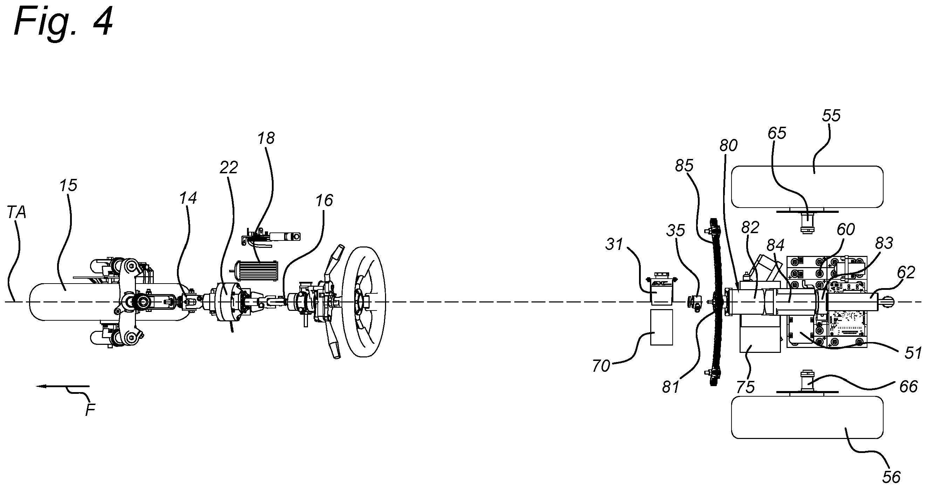

Figs. 3 and 4 respectively show a longitudinal cross-section and a top view of the tilting vehicle 100 of Fig. 1. Figs. 3 and 4 show the front frame section 10 with the one steering front wheel 15 further mounted on a front fork 11, a driver seat 12, a passenger seat 13, a steering member or handle bar 16, the curved tilting rack 85, a set of sensors 22, a front frame G-sensor and gyroscope 31 and a controller 70, as well as an acceleration pedal 18, a brake pedal 19 and a drive and reverse selection member 20, for selecting a driving direction of the vehicle. The listed components are set up in a regular driving arrangement, allowing a driver in the driver seat 12 to operate the acceleration pedal 18, brake pedal 19 , drive and reverse selection member 20 and handle bar 16, which are located within normal reaching distance in front of the driver seat. The passenger seat 13 is shown to be located directly behind the driver seat 12. This set-up allows the front frame section design to remain as narrow and sleek as possible, contributing to better aerodynamics and handling properties and reduces the vehicle's footprint. Alternatively, however, the seats may be positioned side by side, or only a driver seat 12 may be present.

The front wheel 15 is attached to the front frame section 10 via the front fork 11 which is rotatable about a steering axis SA located in the vertical plane, substantially perpendicular to the tilt axis TA. The front fork 11 is angled and constructed in such a way that, the axis reaches the ground at point 17B, which is located in front of the contact point 17A of the wheel with the ground. The caster angle β between the steering axis SA and a vertical axis through the contact point 17A of the wheel with the ground is about 7-8°. The trail 17, the distance along the ground surface G between the contact point 17A and the point 17B at which the steering axis SA reaches the ground, provides the degree of self-centring for the steering. By designing the front frame section such that the front fork 11 is at a caster angle β it provides a positive caster and generates a moment around the steering axis SA that will bring the front wheel back to a straight-ahead equilibrium position. Thus, the vehicle is easier to control and has improved directional stability.

The front fork 11 is mechanically connected to the handle bar 16 through a linkage 14, allowing a driver of the vehicle to rotate the front wheel in a desired driving direction. This linkage 14 is constructed as a transmission with steering rods. Alternatively, the linkage can be a direct coupling, as for example the case of a conventional motor bicycle, or consist of control cables or an hydraulic or electrical actuator. Furthermore, it will be obvious that other steering means may be implemented in addition to or instead of the aforementioned options, in order to provide the vehicle with an auto-pilot function or to provide an autonomous vehicle using the same inventive concept. The sensors 22 are shown as being attached to the handle bar 16. The sensors 22 comprise a steering force sensor and a steering angle sensor, which are coupled to the steering shaft of the front wheel in such a way that the sensors register the steer force exerted by the driver via the handle bar 16 and the wheel caster, the sensors also measure the steering angle. The integrated steering angle and steering force sensor is a product available in the industry.

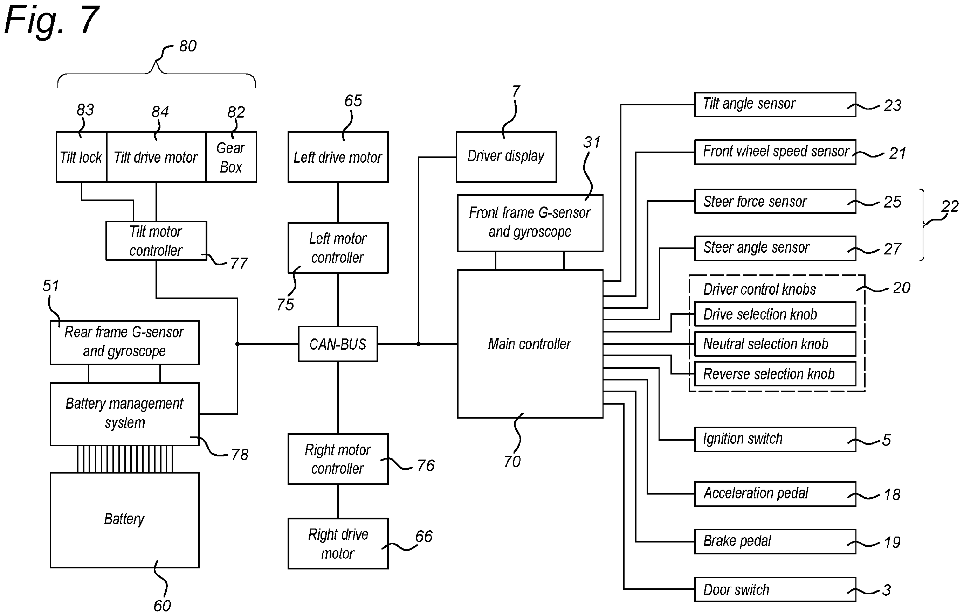

Additionally, a reversing sensor and a speed sensor are positioned in the front wheel 15 (not shown). The G-sensor and gyroscope 31 are positioned at the bottom of the tilting frame, near the controller 70. All measurements are transferred to a controller 70 located under the passenger seat 13 of the front frame section 10. The sensors are discussed in more detail in reference to Fig. 7.

The rear frame section 50 comprising the drive wheels 55,56 is shown to further comprise a rear axle suspension body 54 for connecting the drive wheels to the rear frame section, and shock absorbers 52, as well as a main drive battery 60, a battery management system 78, a battery charger 62, electric drive motors 65, 66, the tilt drive 80 and a rear frame G-sensor and gyroscope 51. The shock absorbers 52 are connected between the rear frame and the rear axle suspension body 54 at the location where the drive wheels 55,56 are attached. The drive wheels are each equipped with independent electric hub motors 65, 66 with their controllers 75, 76, and independently connected to the battery 60 located in the rear frame section 50, via the battery management system 78, for electric power. Further, both hub motor controllers 75,76 are in communication with the controller 70 such that the drive wheels can be driven independently, allowing a difference in torque being generated between the drive wheel motors 65, 66 of the vehicle. In this set-up the controller 70 is arranged to control the controllers 75,76 and electric motors 65,66 individually, allowing them to be run at different velocities, torques and/or directions from each other. Additionally, the controller 70 is arranged to redirect any regenerated electricity resulting from a braking action on one wheel to the other electric motor of the other wheel that is run at a higher speed or torque.

The front frame section 10 is connected to the rear frame section 50 via a hinge 35 defining the rotation point around which the front frame section can be tilted. The distance between the hinge 35 and the pinion 81 defines the tilting moment arm. The tilting axis TA defines a longitudinal centerline of the tilting vehicle around which the wheels 15, 55, 56 are symmetrically spaced and which axis is at an angle α with respect to a ground plane G onto which all three wheels of the vehicle are resting such that the tilting axis is sloped downwards in the direction of the rear of the vehicle. The angle α of the tilting axis is about 7 - 8 degrees. The tilting rack 85 and tilt drive 80 are engaged at some distance above the hinge 35 seen in the tilting plane TP, for controlling the tilting motion of the front frame section 10 along the curvature of the tilting rack 85. Hereto the tilting drive 80 comprises the pinion 81, an electromotor 84, a gear box 82 and a tilt lock 83, which can be electrically disengaged.

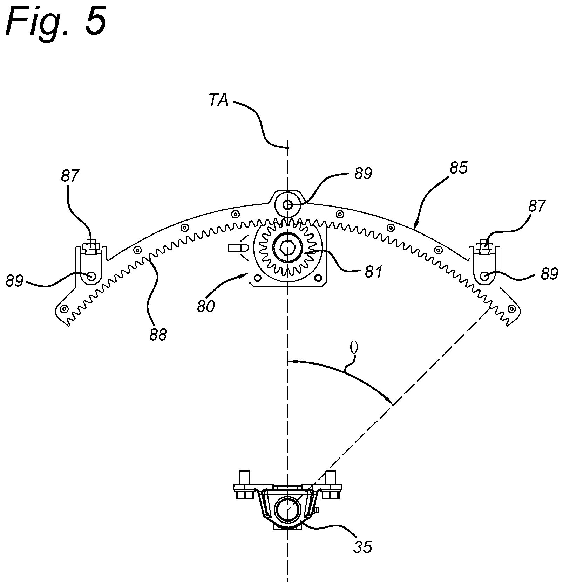

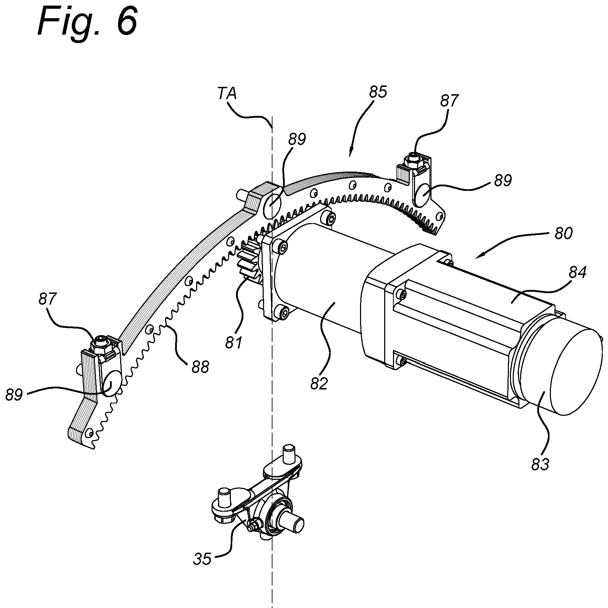

The tilting member or rack 85 is described further for Figs. 5 and 6, which show the tilting mechanism in more detail. The tilting mechanism is shown to comprise the tilting member 85 and the tilting drive 80. The tilting member 85 is a curved rack, with a toothed surface 88 on the inside of the curve and comprises attachment bolts 89, and an adjustment mechanism 87. The tilting drive 80 is shown as comprising the pinion 81, the electromotor 84, the gear box 82 and the tilt lock 83. The electromotor 84 is connected to the pinion 81 via the gear box, which gear box 82 is set up to translate a higher rotation of the electromotor 84 to a high torque of the pinion 81. The gear box transmission is about 1:24. The rack 85 is connected to the front frame section 10 (not shown here) via attachment bolts 89, which are located at both ends and in the centre of the tilting member. When attached, the tilting member 85 is situated such that the rotational center of the partially circular frame coincides with the hinge connection 35 of the front and rear frame sections 10, 50, such that the plane of symmetry of the tilting member 85 is perpendicular to the tilting axis TA. Additionally, the adjustment mechanism 87 is arranged between the ends of the tilting member and the frame (not shown), for controlling an offset from an initial mounting position of the rack 85 with respect to the frame 50 in the tilting plane TP.

The adjustment mechanism 87 has adjusting screws at both ends of the rack 85, which allow easy manual adjustment as required. When the rear frame section 50 is connected to the front frame section 10 at the hinge connection 35, previously discussed in relation to Figs. 3 and 4, the pinion 81 of the tilting drive 80 should accurately engage with the toothed surface 88 such that the pinion 81 can rotate along the entire toothed surface 88 smoothly. This smooth interaction is achieved by adjusting the position of the rack 85 with respect to the front frame section 10 to which it is connected, whereby a distance between either end of the tilting member 85 and the hinge connection 35. During the operational life of the vehicle 100, the toothed surface 88 and pinion 81 will experience wear and tear, which can be compensated by intermitted adjustments of the position of the rack 85 prolonging the lifetime for both components. When worn out, the rack 85 can easily be removed and replaced through the bolted attachments 87 to the frame.

The electromotor 84 of the tilting drive 80 is controlled by a motor controller mounted in the rear frame and is also connected to the battery 60 for electric power. In the vehicle 100 as depicted in the previous Figures, the amperage and voltage to the electromotor 84 are controlled by the tilt motor controller as imposed by the main controller 70. Thus, the main controller 70 ultimately controls the activation of the tilting motion between the front frame section 10 and the rear frame section 50. The tilt lock 83 mechanically locks the tilting angle 8 of the front frame section 10 with respect to the rear frame section 50 when the vehicle is in a parking position and no power is supplied.

When the electrical power is switched on, thus when the vehicle 100 is in use, the tilting drive 80 is mainly controlled depending on input provided to the main controller 70 by the tilt angle sensor 23, the G- and gyro sensors 31,51 in the front frame section 10 and the rear frame section 50 in order to keep the vehicle upright. Upon switching on the vehicle, the tilt lock 83 is electrically disengaged so the front frame section 10 can tilt actively. If the rear frame section 50 of the vehicle is not fully horizontal while no steering input is provided as detected by the tilt angle sensor 23, the front frame section 10 of the vehicle 100 will be put in the upright position. When driving on an angled road surface or with one wheel on the curb, a measurement input to the main control 70 unit from the tilt angle sensor and/or the lateral acceleration sensor and/or a gyro sensor detects the inclined position of the rear frame section 50. The main controller 70 now causes the tilting drive 80 to rotate such that the front frame 10 tilts upright.

To ensure that the front frame section 10 even remains stably upright while driving over uneven surfaces, the controller 70 controlling the tilting drive 80, based on driver steering input, is adapted to allow the pinion 81 to move freely along the toothed surface 88 of the rack 85 around a neutral position, in which the front frame section is substantially vertical when no steering input is provided. Thus, when no steering input is provided to the tilting drive 80, the pinion 81 is positioned along the toothed surface 88 of the tilting member 85 such that the front frame section 10 of the vehicle 100 is in a substantially vertical upright position , which defines the neutral position along the toothed surface 88. In the neutral position only a low torque acts on the pinion 81, allowing the gear 81 of the tilting drive 80 to freely move along the toothed surface 88 around this neutral position. As a result, no shocks are transmitted to the gear 81 and toothed surface 88, reducing the wear of both elements, which therefore can be of relatively light-weight construction. Additionally, driver comfort is ensured as little to no forces acting on the rear frame section 50 due to ground surface G unevenness are being transmitted to the handle bar 16 or cause substantial additional tilting of the front frame section 10 of the vehicle with respect to the vertical position.

When a steering input is provided which results in the vehicle 100 tilting, the pinion 81 is operated at a high torque. The relation between the sensors, controller 70, battery and drive and tilt motors 65,66,80 is further described for Fig. 7.

Fig. 7 shows a schematic overview of the control system for balancing the tilting vehicle of Fig. 1. The schematic shows a speed sensor 21, a tilt angle sensor 23, a steer force sensor 25, a steering angle sensor 27, a front frame G-sensor and gyroscope 31, a rear frame G-sensor and gyroscope 51, a controller 70, a battery management system 78, a battery 60, electric drive motors 65, 66 and a tilting drive 80. All signals from all sensors are conducted via electric wires to a first side of the main control unit 70. On a second side of the main control unit 70, the tilt motor 80 and the two wheel hub motors 65, 66 are connected via electric wires, for receiving control signals from the control unit and for providing information to the controller, such as motor rotation speed, motor position, motor amperage, motor voltage and motor temperature. Further, the tilt motor 80 and the two wheel hub motors 65, 66 are each individually connected to the battery, via the battery management system 78. Through these individual connections, an exact power distribution can be achieved, which ultimately leads to energy savings. When the driver desires to change direction, and therefore exerts a momentum on the steering wheel, this moment will be monitored by the steering force sensor 25. Depending on the speed of the vehicle, as measured by the speed sensor 21, the controller 70 will determine a required tilting angle and moment required on the rear frame section 10 for balanced driving through a bend and a corresponding required individual torque for each of the drive wheels 55, 56. In addition to controlling the tilting drive 80, the controller 70 forwards signals to the wheel hub motors 65, 66 such that the a difference in torque between the wheels 55,56 generates the required moment. In doing so, one wheel hub motor is run at a higher torque than the other wheel hub motor, wherein the higher amount required by this one motor can be routed directly from the battery 60 or in the situation where the other wheel 56 is slowed down for achieving said torque difference, energy may be regenerated from the braking action which can directly be fed into the other wheel hub motor, thereby saving energy from the battery 60. Through this combination of a differential torque generating means, the steer force sensor 25, the speed sensor 21, and the tilting elements, it is possible to achieve a prompt and direct balancing action at all speeds and in particular also at high speeds.

When the driver puts the vehicle into drive and operates the accelerator pedal 18, both wheel hub motors 65,66 will give the same amount of positive/forward torque such that the vehicle starts to accelerate similar to known electric vehicles. However, the controller 70 of this tilting vehicle 100 is arranged such that, when the vehicle is driving at a constant very slow speed for instance below 3 km/h , no acceleration torque is applied on the rear wheels 55,56, whereby the controller 70 controls the wheel hub motor controls 75, 76 such that when steering the vehicle the torque on the inner wheel is negative, resulting in a relative breaking effect on the inner wheel, and the torque on the outer wheel is positive resulting in a relative accelerating effect on the outer wheel, while substantially no tilting motion occurs. As a result, inward pointing torque is generated on the vehicle 100 in the form of a positive moment around a substantially vertical axis VA of the rear frame, allowing the vehicle being driven around relatively narrow corners without requiring the tilting motion, making the vehicle easy to operate in dense (slow) traffic areas. A very slow speed is any speed below a low speed threshold of for example 3 km/h. At increasing velocity, less positive torque is required from the drive wheels 55,56 to maintain good maneuverability of the vehicle, as the vehicle will start tilting, which tilting motion supports the ease with which the vehicle can drive through bends. Therefore, the controller 70 is arranged to control the generated torque difference between the wheel hub motors 65,66 in dependency of the velocity of the vehicle. When at low speeds, higher than the low speed threshold, a steer force is detected by the steering force sensor 25 for turning into a bend, a relatively small tilting motion is set in action by the controller 70, while a torque on the inner wheel hub motor is reduced and a torque on the outer wheel hub motor is increased. With increasing speed, the tilting motion becomes larger, while the torque difference between the inner wheel hub motor and the outer wheel hub motor is decreased. At higher speeds, such as above 50 km/h, the gyroscopic effect of the front wheel resists tilting of the front frame section. Hereby the controller 70 controls the wheel hub motor controls 75, 76 such that when steering the vehicle the torque on the inner wheel is positive, resulting in a relative accelerating effect on the inner wheel, and the torque on the outer wheel is negative resulting in a relative breaking effect on the outer wheel, as a result outwards pointing torque is generated on the vehicle 100 in the form of a negative moment around a substantial vertical axle VA. The counteracting steering force on the front wheel thus requires a lower tilting force. In this way the driver is assisted in driving into the curve at high speed and fast tilting can be achieved with the light-construction tilting drive 80 and member 85 using less energy

The present invention has been described above with reference to a number of exemplary embodiments as shown in the drawings. Modifications and alternative implementations of some parts or elements are possible, and are included in the scope of protection as defined in the appended claims. For example, the front frame and rear frame sections could easily be supplied with additional wheels whilst maintaining the functionality of the tilting vehicle as described for the exemplary embodiments as shown in the drawings.

## Claims

1. Tilting vehicle (100) comprising a rear frame section (50) having two drive wheels (55,56) and a front frame section (10) having at least one wheel (15), connected to the rear frame section (50) such as to be tiltable about a tilt axis (TA) that extends in a length direction, the front frame section (10) carrying a driver seat (12), the rear frame section (50) comprising a propulsion drive for rotating the drive wheels (55,56), a tilting drive (80) for tilting the front frame section (10) about the tilt axis (TA) and a controller (70) for controlling the tilting drive (80) based on driver steering input, **characterized in that** the tilting drive (80) comprises an electric motor situated at a predetermined distance from the tilt axis (TA) with a gear (81), and a tilting member (85) having a toothed surface (88) engaging with the gear (81) such that the tilting member (85) can be displaced transversely to the tilting axis (TA) by rotation of the gear (81), whereby the tilting drive (80) and the tilting member (85) are connected to the respective front and rear frame sections (10,50) and wherein the controller (70) is adapted to allow the gear (81) of the tilting drive (80) to move freely along the toothed surface (88) of the tilting member (85) around a neutral position in which the front frame section (10) is substantially vertical when no steering input is provided.

2. Tilting vehicle (100) according to claim 1, wherein the vehicle is self-balancing

3. Tilting vehicle (100) according to claim 1 or 2, wherein the controller (70) and the propulsion drive are adapted to drive each drive wheel (55,56) at a mutually different speed or torque.

4. Tilting vehicle (100) according to claim 2 or 3, each drive wheel (55,56) comprising a respective electric motor (65,66).

5. Tilting vehicle (100) according to any one of the preceding claims, wherein a longitudinal drive axis of the tilting drive (80) is parallel to the tilting axis.

6. Tilting vehicle (100) according to any one of the previous claims, wherein a common plane extends through the toothed surface (88) of the tilting member (85) and a toothed surface of the drive gear (81).

7. Tilting vehicle (100) according to any one of the previous claims, wherein the predetermined distance of the gear (81) from the tilt axis (TA) is between 10 and 120 cm, preferably between 15 cm and 100 cm.

8. Tilting vehicle (100) according to any one of the previous claims, the rear frame section (50) comprising a battery (60) providing power to the drive wheels (55,56) and to the tilting drive (80).

9. Tilting vehicle (100) according to any one of the previous claims, the tilting member (85) having a curved toothed surface (88) with a center of curvature situated at or near the tilting axis (TA).

10. Tilting vehicle (100) according to any one of the previous claims, wherein the propulsion drive (65,66) comprises an electric motor placed at each respective drive wheel (55,56), the battery (60) being situated between the drive wheels (55,56).

11. Tilting vehicle (100) according to claim 7, wherein the tilting member (85) is partly circular and is connected to the front frame section (10) on each side of a vertical plane through the tilting axis (TA), the tilting member (85) extending above the battery (60).

12. Tilting vehicle (100) according to any one of the previous claims, wherein the distance of the tilting axis (TA) from a horizontal drive surface (G) is larger at the front wheel position then at the rear wheel position.

13. Tilting vehicle (100) according to any one of the previous claims, wherein the plane (TP) of the tilting member is substantially perpendicular to the tilting axis (TA).

14. Tilting vehicle (100) according to any of the preceding claims, wherein the electric motor comprises a housing with a motor member (84), a transmission gear (82) connected to the drive gear (81) and a resilient brake member (83) which blocks rotation of the drive gear (81) when no electrical power is supplied to the motor member.

15. Tilting vehicle (100) according to any one of the previous claims, wherein an adjustment mechanism (87) is arranged at ends of the titling member (85).

## Patentansprüche

1. Neigefahrzeug (100) mit einem hinteren Rahmenabschnitt (50), der zwei Antriebsräder (55, 56) hat, und einem vorderen Rahmenabschnitt (10), der mindestens ein Rad (15) hat, der mit dem hinteren Rahmenabschnitt (50) verbunden ist, sodass er um eine Neigeachse (TA), die sich in einer Längsrichtung erstreckt, neigbar ist, wobei der vordere Rahmenabschnitt (10) einen Fahrersitz (12) trägt, wobei der hintere Rahmenabschnitt (50) einen Vortriebsantrieb zum Rotieren der Antriebsräder (55, 56), einen Neigeantrieb (80) zum Neigen des vorderen Rahmenabschnitts (10) um die Neigeachse (TA) und eine Steuerungseinrichtung (70) zum Steuern des Neigeantriebs (80) auf Grundlage einer Lenkeingabe des Fahrers aufweist, **dadurch gekennzeichnet, dass** der Neigeantrieb (80) einen elektrischen Motor, der mit einem vorbestimmten Abstand von der Neigeachse (TA) mit einem Zahnrad (81) gelegen ist, und ein Neigebauteil (85) aufweist, das eine gezahnte Fläche (88) hat, die mit dem Zahnrad (81) in Eingriff steht, sodass das Neigebauteil (85) durch Rotation des Zahnrads (81) quer zu der Neigeachse (TA) versetzt werden kann, wodurch der Neigeantrieb (80) und das Neigebauteil (85) mit jeweiligen vorderen und hinteren Rahmenabschnitten (10, 50) verbunden sind, und wobei die Steuerungseinrichtung (70) angepasst ist, dem Zahnrad (81) des Neigeantriebs (80) zu ermöglichen, sich frei entlang der gezahnten Fläche (88) des Neigebauteils (85) um eine neutrale Position herum zu bewegen, in welcher der vordere Rahmenabschnitt (10) im Wesentlichen vertikal ist, wenn keine Lenkeingabe vorliegt.

2. Neigefahrzeug (100) nach Anspruch 1, wobei das Fahrzeug selbstbalancierend ist.

3. Neigefahrzeug (100) nach Anspruch 1 oder 2, wobei die Steuerungseinrichtung (70) und der Vortriebsantrieb angepasst sind, jedes Antriebsrad (55, 56) mit einer/einem gegenseitig unterschiedlichen Geschwindigkeit oder Drehmoment anzutreiben.

4. Neigefahrzeug (100) nach Anspruch 2 oder 3, wobei jedes Antriebsrad (55, 56) einen jeweiligen elektrischen Motor (65, 66) aufweist.

5. Neigefahrzeug (100) nach einem der vorangehenden Ansprüche, wobei eine Längsantriebsachse des Neigeantriebs (80) parallel zu der Neigeachse ist.

6. Neigefahrzeug (100) nach einem der vorangehenden Ansprüche, wobei sich eine gemeinsame Ebene durch die gezahnte Fläche (88) des Neigebauteils (85) und einer gezahnten Fläche des Antriebszahnrads (81) erstreckt.

7. Neigefahrzeug (100) nach einem der vorangehenden Ansprüche, wobei der vorbestimmte Abstand des Zahnrads (81) von der Neigeachse (TA) zwischen 10 und 120 cm, vorzugsweise zwischen 15 cm und 100 cm, liegt.

8. Neigefahrzeug (100) nach einem der vorangehenden Ansprüche, wobei der hintere Rahmenabschnitt (50) eine Batterie (60) aufweist, die die Antriebsräder (55, 56) und den Neigeantrieb (80) mit Leistung versorgt.

9. Neigefahrzeug (100) nach einem der vorangehenden Ansprüche, wobei das Neigebauteil (85) eine gekrümmte gezahnte Fläche (88) mit einem Krümmungsmittelpunkt hat, der auf oder nahe der Neigeachse (TA) gelegen ist.

10. Neigefahrzeug (100) nach einem der vorangehenden Ansprüche, wobei der Vortriebsantrieb (65, 66) einen elektrischen Motor aufweist, der an jedem jeweiligen Antriebsrad (55, 56) platziert ist, wobei die Batterie (60) zwischen den Antriebsrädern (55, 56) gelegen ist.

11. Neigefahrzeug (100) nach Anspruch 7, wobei das Neigebauteil (85) teilweise kreisförmig ist und mit dem vorderen Rahmenabschnitt (10) auf jeder Seite einer vertikalen Ebene durch die Neigeachse (TA) verbunden ist, wobei sich das Neigebauteil (85) oberhalb der Batterie (60) erstreckt.

12. Neigefahrzeug (100) nach einem der vorangehenden Ansprüche, wobei der Abstand der Neigeachse (TA) von einer horizontalen Antriebsfläche (G) an der vorderen Radposition größer ist als an der hinteren Radposition.

13. Neigefahrzeug (100) nach einem der vorangehenden Ansprüche, wobei die Ebene (TP) des Neigebauteils im Wesentlichen senkrecht zu der Neigeachse (TA) ist.

14. Neigefahrzeug (100) nach einem der vorangehenden Ansprüche, wobei der elektrische Motor ein Gehäuse mit einem Motorbauteil (84), einem Übertragungszahnrad (82), das mit dem Antriebszahnrad (81) verbunden ist, und einem widerstandsfähigen Bremsbauteil (83) hat, welches eine Rotation des Antriebszahnrads (81) blockiert, wenn keine elektrische Leistung dem Motorbauteil zugeführt wird.

15. Neigefahrzeug (100) nach einem der vorangehenden Ansprüche, wobei ein Einstellmechanismus (87) an Enden des Neigebauteils (85) angeordnet ist.

## Revendications

1. - Véhicule inclinable (100) comprenant une section de châssis arrière (50) ayant deux roues motrices (55, 56) et une section de châssis avant (10) ayant au moins une roue (15), reliée à la section de châssis arrière (50) de façon à être inclinable autour d'un axe d'inclinaison (TA) qui s'étend dans une direction de longueur, la section de châssis avant (10) portant un siège conducteur (12), la section de châssis arrière (50) comprenant un entraînement de propulsion pour faire tourner les roues motrices (55, 56), un entraînement d'inclinaison (80) pour incliner la section de châssis avant (10) autour de l'axe d'inclinaison (TA) et une unité de commande (70) pour commander l'entraînement d'inclinaison (80) sur la base d'une entrée de direction de conducteur, **caractérisé par le fait que** l'entraînement d'inclinaison (80) comprend un moteur électrique situé à une distance prédéterminée de l'axe d'inclinaison (TA) avec une roue dentée (81), et un élément d'inclinaison (85) ayant une surface dentée (88) en prise avec la roue dentée (81) de telle sorte que l'élément d'inclinaison (85) peut être déplacé transversalement à l'axe d'inclinaison (TA) par rotation de la roue dentée (81), ce par quoi l'entraînement d'inclinaison (80) et l'élément d'inclinaison (85) sont reliés aux sections de châssis avant et arrière respectives (10,50), et l'unité de commande (70) étant agencée pour permettre à la roue dentée (81) de l'entraînement d'inclinaison (80) de se déplacer librement le long de la surface dentée (88) de l'élément d'inclinaison (85) autour d'une position neutre dans laquelle la section de châssis avant (10) est sensiblement verticale lorsqu'aucune entrée de direction n'est fournie.

2. - Véhicule inclinable (100) selon la revendication 1, dans lequel le véhicule est à auto-équilibrage.

3. - Véhicule inclinable (100) selon la revendication 1 ou 2, dans lequel l'unité de commande (70) et l'entraînement de propulsion sont agencés pour entraîner chaque roue motrice (55, 56) à une vitesse ou un couple mutuellement différent.

4. - Véhicule inclinable (100) selon la revendication 2 ou 3, chaque roue motrice (55, 56) comprenant un moteur électrique respectif (65, 66).

5. - Véhicule inclinable (100) selon l'une quelconque des revendications précédentes, dans lequel un axe d'entraînement longitudinal de l'entraînement d'inclinaison (80) est parallèle à l'axe d'inclinaison.

6. - Véhicule inclinable (100) selon l'une quelconque des revendications précédentes, dans lequel un plan commun s'étend à travers la surface dentée (88) de l'élément d'inclinaison (85) et une surface dentée de la roue dentée d'entraînement (81).

7. - Véhicule inclinable (100) selon l'une quelconque des revendications précédentes, dans lequel la distance prédéterminée de la roue dentée (81) à l'axe d'inclinaison (TA) est comprise entre 10 et 120 cm, de préférence entre 15 cm et 100 cm.

8. - Véhicule inclinable (100) selon l'une quelconque des revendications précédentes, la section de châssis arrière (50) comprenant une batterie (60) fournissant de l'énergie aux roues motrices (55, 56) et à l'entraînement d'inclinaison (80).

9. - Véhicule inclinable (100) selon l'une quelconque des revendications précédentes, l'élément d'inclinaison (85) ayant une surface dentée incurvée (88) avec un centre de courbure situé à ou à proximité de l'axe d'inclinaison (TA).

10. - Véhicule inclinable (100) selon l'une quelconque des revendications précédentes, dans lequel l'entraînement de propulsion (65, 66) comprend un moteur électrique placé à chaque roue motrice respective (55, 56), la batterie (60) étant située entre les roues motrices (55, 56) .

11. - Véhicule inclinable (100) selon la revendication 7, dans lequel l'élément d'inclinaison (85) est en partie circulaire et est relié à la section de châssis avant (10) de part et d'autre d'un plan vertical passant par l'axe d'inclinaison (TA), l'élément d'inclinaison (85) s'étendant au-dessus de la batterie (60) .

12. - Véhicule inclinable (100) selon l'une quelconque des revendications précédentes, dans lequel la distance de l'axe d'inclinaison (TA) à une surface d'entraînement horizontale (G) est plus grande à la position de roue avant qu'à la position de roue arrière.

13. - Véhicule inclinable (100) selon l'une quelconque des revendications précédentes, dans lequel le plan (TP) de l'élément d'inclinaison est sensiblement perpendiculaire à l'axe d'inclinaison (TA).

14. - Véhicule inclinable (100) selon l'une quelconque des revendications précédentes, dans lequel le moteur électrique comprend un carter avec un élément moteur (84), un engrenage de transmission (82) relié à la roue dentée d'entraînement (81), et un élément de freinage élastique (83) qui bloque une rotation de la roue dentée d'entraînement (81) lorsqu'aucune énergie électrique n'est fournie à l'élément moteur.

15. - Véhicule inclinable (100) selon l'une quelconque des revendications précédentes, dans lequel un mécanisme de réglage (87) est disposé aux extrémités de l'élément d'inclinaison (85).
